# FASCICULE DE BREVET EUROPEEN

(11) **EP 3 600 915 B1**
(45) Date de publication et mention de la délivrance du brevet: **24.02.2021**
(21) Numéro de dépôt: 18722653.5
(22) Date de dépôt: 28.03.2018
(51) Int. Cl.: B60C 1/00, B60C 9/00

(54) **PNEUMATIQUE POUR VÉHICULE DE TOURISME**
REIFEN FÜR EINEN PRIVATEN PERSONENKRAFTWAGEN
TYRE FOR A PRIVATE PASSENGER VEHICLE

(30) Priorité: 30.03.2017 FR 1752685
(43) Date de publication de la demande: 05.02.2020
(73) Titulaire: COMPAGNIE GENERALE DES ETABLISSEMENTS MICHELIN, 63000 Clermont-Ferrand (FR)
(72) Inventeur: MUHLHOFF, Olivier, 963040 CLERMONT-FERRAND Cedex 9 (FR); LABRUNIE, Philippe, 63040 Clermont Ferrand Cedex 9 (FR)
(74) Mandataire: Desbordes, Guillaume
(86) Numéro de dépôt international: PCT/FR2018/050751
(87) Numéro de publication internationale: WO 2018/178568

(56) Documents cités:
- WO-A1-2016/015964
- WO-A1-2016/166057
- WO-A1-2016/202703

## Description

L'invention a pour objet un pneumatique radial destiné à équiper un véhicule de tourisme, appelé usuellement pneumatique de tourisme.

Le domaine de pneumatique plus particulièrement concerné est celui des pneumatiques de tourisme dont la section méridienne est caractérisée par une largeur de section S et une hauteur de section H, au sens de la norme de la European Tyre and Rim Technical Organisation ou « ETRTO », telles que le rapport H/S, exprimé en pourcentage, est au plus égal 55, et la largeur de section S est au moins égale à 205 mm. En outre le diamètre au seat D, définissant le diamètre de la jante de montage du pneumatique, est au moins égal à 17 pouces, et généralement au plus égal à 21 pouces. A titre d'exemple, un pneumatique de dimension 225/40R18 appartient à cette catégorie de pneumatiques.

Dans ce qui suit, et par convention, les directions circonférentielle XX', axiale YY' et radiale ZZ' désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur », respectivement « radialement extérieur», on entend «plus proche de l'axe de rotation du pneumatique », respectivement « plus éloigné de l'axe de rotation du pneumatique». Par «axialement intérieur », respectivement « axialement extérieur», on entend «plus proche du plan équatorial du pneumatique», respectivement « plus éloigné du plan équatorial du pneumatique», le plan équatorial XZ du pneumatique étant le plan passant par le milieu de la surface de roulement du pneumatique et perpendiculaire à l'axe de rotation du pneumatique.

De façon générale, un pneumatique comprend une bande de roulement, destinée à entrer en contact avec le sol par l'intermédiaire d'une surface de roulement, et reliée par l'intermédiaire de deux flancs à deux bourrelets, assurant la liaison mécanique entre le pneumatique et la jante sur laquelle il est monté. Un pneumatique radial comprend une armature de renforcement, comprenant une armature de sommet, radialement intérieure à la bande de roulement, et une armature de carcasse, généralement radialement intérieure à l'armature de sommet.

La bande de roulement comprend des éléments en relief séparés les uns des autres par des creux. L'agencement des éléments en relief et des creux constitue la sculpture de la bande de roulement. Les éléments en relief s'étendent radialement vers l'extérieur à partir d'une surface de fond jusqu'à la surface de roulement. Pour un pneumatique à l'état neuf, la distance radiale entre la surface de fond et la surface de roulement, mesurée dans le plan équatorial du pneumatique, est appelée hauteur de sculpture H_{S}. La proportion de creux par rapport aux éléments en relief est définie par un taux d'entaillement volumique T_{EV}, égal au rapport entre le volume total des creux et la somme des volumes totaux respectifs des creux et des éléments en relief. Les mesures de volumes sont réalisées par des relevés de profil de la bande de roulement du pneumatique neuf, par exemple, par laser. A titre d'exemple, la bande de roulement d'un pneumatique de tourisme de l'état de la technique, à l'état neuf, a une hauteur de sculpture H_{S} au moins égale à 7.5 mm et au plus égale à 8 mm et un taux d'entaillement volumique T_{EV} au moins égal à 30% et au plus égal à 32%.

La bande de roulement comprend au moins un matériau polymérique de type mélange élastomérique, c'est-à-dire un matériau polymérique obtenu par mélangeage d'au moins un élastomère, d'au moins une charge renforçante et d'un système de réticulation. Le plus souvent, la bande de roulement est constituée par un mélange élastomérique unique.

Une caractéristique physique usuelle d'un mélange élastomérique est sa température de transition vitreuse Tg, température à laquelle le mélange élastomérique passe d'un état caoutchouteux déformable à un état vitreux rigide. La température de transition vitreuse Tg d'un mélange élastomérique est généralement déterminée lors de la mesure des propriétés dynamiques du mélange élastomérique, sur un viscoanalyseur (Metravib VA4000), selon la norme ASTM D 5992-96. La mesure des propriétés dynamiques est réalisée sur un échantillon de mélange élastomérique vulcanisé, c'est-à-dire cuit jusqu'à un taux de conversion d'au moins 90%, l'échantillon ayant la forme d'une éprouvette cylindrique ayant une épaisseur égale à 2 mm et une section égale à 78,5 mm². On enregistre la réponse de l'échantillon de mélange élastomérique à une sollicitation sinusoïdale en cisaillement simple alterné, ayant une amplitude crête-crête égale à 0,7 MPa et une fréquence égale à 10 Hz. On effectue un balayage en température à vitesse de montée en température constante de +1.5°C/min. Les résultats exploités sont généralement le module complexe de cisaillement dynamique G*, comprenant une partie élastique G' et une partie visqueuse G", et la perte dynamique tgδ, égale au rapport G"/G'. La température de transition vitreuse Tg est la température à laquelle la perte dynamique tgδ atteint un maximum lors du balayage en température.

Le comportement mécanique d'un mélange élastomérique peut être caractérisé, d'une part, par sa dureté Shore A, mesurée conformément aux normes DIN 53505 ou ASTM 2240, et, d'autre part, par sa perte à 60°C, qui est une perte d'énergie à 60 °C par rebond à énergie imposée mesurée au sixième choc et dont la valeur, exprimée en %, est la différence entre l'énergie fournie et l'énergie restituée, rapportée à l'énergie fournie.

A titre d'exemple, le matériau constitutif de la bande de roulement d'un pneumatique de tourisme de l'état de la technique pris en référence est un mélange élastomérique ayant une température de transition vitreuse T_{g} au moins égale à -5°C et au plus égale à -1°C, une dureté Shore A au moins égale à 73 et au plus égale à 75, et une perte à 60°C en moyenne égale à 35% et au plus égale à 38%.

L'armature de sommet, radialement intérieure à la bande de roulement et radialement extérieure à l'armature de carcasse, comprend, radialement de l'extérieur vers l'intérieur, une armature de frettage comprenant au moins une couche de frettage et une armature de travail comprenant au moins une couche de travail.

L'armature de sommet a pour fonction de reprendre à la fois les sollicitations mécaniques de gonflage, générées par la pression de gonflage du pneumatique et transmises par l'armature de carcasse, et les sollicitations mécaniques de roulage, générées par le roulage du pneumatique sur un sol et transmises par la bande roulement. L'armature de travail a pour fonction spécifique de conférer au pneumatique de la rigidité selon les directions circonférentielle, axiale et radiale et, en particulier, de la tenue de route. L'armature de frettage a pour fonction spécifique d'apporter une rigidité circonférentielle supplémentaire par rapport à l'armature de travail, pour limiter les déformations radiales du pneumatique.

L'armature de frettage, pour un pneumatique de tourisme, comprend le plus souvent une seule couche de frettage. Une couche de frettage comprend des renforts généralement en textile, par exemple en polyamide aliphatique tel que le nylon, enrobés dans un mélange élastomérique et parallèles entre eux. Les renforts forment, avec la direction circonférentielle XX' du pneumatique, un angle A_{F}, mesuré dans le plan équatorial XZ du pneumatique, au plus égal à 5°, voire au plus égal à 1°, en valeur absolue.

L'armature de travail, pour un pneumatique de tourisme, comprend usuellement deux couches de travail, radialement superposées, comprenant des renforts métalliques enrobés dans un mélange élastomérique, parallèles entre eux dans chaque couche et croisés d'une couche à la suivante, en formant, avec la direction circonférentielle XX' du pneumatique, des angles (A_{T1}, A_{T2}), mesurés dans le plan équatorial XZ du pneumatique, dont la valeur absolue est généralement au moins égale à 20° et au plus égale à 25°. L'armature de travail a une largeur axiale L_{T}, définie comme la largeur axiale maximale des couches de travail, au moins égale à la largeur axiale L_{F} de l'armature de frettage, définie le plus souvent comme la largeur axiale de l'unique couche de frettage.

Les renforts métalliques des couches de travail sont des câbles constitués par un assemblage de fils métalliques. A titre d'exemple, les renforts métalliques utilisés pour le pneumatique de tourisme de l'état de la technique, pris en référence, est un câble (2+2).26, constitué par un assemblage torsadé de deux paires de deux fils métalliques ayant chacun un diamètre égal à 0.26 mm.

De façon générale, un renfort métallique est caractérisé mécaniquement par une courbe représentant la force de traction (en N), appliquée au renfort métallique, en fonction de l'allongement relatif (en %) du renfort métallique, dite courbe force-allongement. De cette courbe force-allongement sont déduites des caractéristiques mécaniques en traction, telles que l'allongement structural Aₛ (en %), l'allongement total à la rupture Aₜ (en %), la force à la rupture Fₘ (charge maximale en N) et la résistance à la rupture Rₘ (en MPa), ces caractéristiques étant mesurées selon la norme ISO 6892 de 1984.

L'allongement total à la rupture Aₜ du renfort métallique est, par définition, la somme de ses allongements structural, élastique et plastique (Aₜ = Aₛ + Aₑ + Aₚ). L'allongement structural Aₛ résulte du positionnement relatif des fils métalliques constitutifs du renfort métallique sous un faible effort de traction. L'allongement élastique Aₑ résulte de l'élasticité même du métal des fils métalliques, constituant le renfort métallique, pris individuellement (loi de Hooke). L'allongement plastique Aₚ résulte de la plasticité (déformation irréversible au-delà de la limite d'élasticité) du métal de ces fils métalliques pris individuellement. Ces différents allongements ainsi que leurs significations respectives, bien connus de l'homme du métier, sont décrits, par exemple, dans les documents US 5843583, WO 2005014925 et WO 2007090603.

On définit également, en tout point de la courbe force-allongement, un module en extension (en GPa) qui représente la pente de la droite tangente à la courbe force-allongement en ce point. En particulier, on appelle module élastique en extension ou module d'Young, le module en extension de la partie linéaire élastique de la courbe force-allongement.

Les renforts métalliques des couches de travail sont le plus souvent non élastiques, c'est-à-dire caractérisés par un allongement relatif, sous une force de traction égale 10% de la force à rupture Fₘ, au plus égal à 0.2% et un module élastique en extension compris usuellement entre 150 GPa et 200 GPa.

Radialement à l'intérieur de l'armature de sommet, l'armature de carcasse comprend généralement au moins une couche de carcasse comprenant des renforts le plus souvent en matériau textile, enrobés dans un matériau élastomérique et parallèles entre eux. Les renforts d'une couche de carcasse forment, avec la direction circonférentielle XX' du pneumatique, un angle A_{C} au moins égal à 85° et au plus égal 95°. Un matériau textile couramment utilisé pour les renforts d'une couche de carcasse, pour un pneumatique de tourisme de l'état de la technique, est un polyester tel qu'un polyéthylène téréphtalate (PET).

Une couche de carcasse peut être retournée ou non retournée. Une couche de carcasse est dite retournée, lorsqu'elle comprend une partie principale, reliant les deux bourrelets du pneumatique entre eux, et s'enroule, dans chaque bourrelet, de l'intérieur vers l'extérieur du pneumatique autour d'un élément de renforcement circonférentiel ou tringle, pour former un retournement ayant une extrémité libre. Une couche de carcasse est non retournée, lorsqu'elle est constituée uniquement d'une partie principale, reliant les deux bourrelets entre eux, sans s'enrouler autour d'une tringle.

Les principales performances visées pour un pneumatique de tourisme sont les adhérences longitudinale et transversale sur sol mouillé et sur sol sec, le comportement, en particulier à faible accélération transversale, et l'usure.

Les inventeurs se sont données pour objectif d'améliorer encore, par rapport à un pneumatique de tourisme de l'état de la technique tel que précédemment décrit, les adhérences longitudinale et transversale sur sol mouillé et sur sol sec, tout en maintenant les niveaux de performances en comportement, en particulier à faible accélération transversale, et en usure.

Ce but a été atteint, selon l'invention, par un pneumatique pour véhicule de tourisme comprenant :
- une bande de roulement, destinée à entrer en contact avec un sol par l'intermédiaire d'une surface de roulement et comprenant des éléments en relief s'étendant radialement vers l'extérieur à partir d'une surface de fond jusqu'à la surface de roulement sur une hauteur radiale H_{S} mesurée dans un plan équatorial XZ du pneumatique, les éléments en relief ayant un volume total V_{P} et étant séparés par des creux ayant un volume total V_{C}, la bande de roulement ayant un taux d'entaillement volumique T_{EV}, défini comme le rapport entre le volume total V_{C} des creux et la somme du volume total V_{C} des creux et du volume total V_{P} des éléments en relief, la bande de roulement comprenant en outre au moins un mélange élastomérique ayant une température de transition vitreuse T_{g}, une dureté Shore A et une perte à 60°C,
- une armature de frettage, radialement intérieure à la bande de roulement, comprenant au moins une couche de frettage comprenant des renforts textiles enrobés dans un mélange élastomérique, parallèles entre eux et formant, avec une direction circonférentielle XX' du pneumatique, un angle A_{F}, mesuré dans le plan équatorial XZ du pneumatique, au plus égal à 5° en valeur absolue,
- une armature de travail, radialement intérieure à l'armature de frettage, comprenant au moins deux couches de travail, radialement superposées, comprenant des renforts métalliques enrobés dans un mélange élastomérique, parallèles entre eux dans chaque couche et croisés d'une couche à la suivante, en formant, avec la direction circonférentielle XX' du pneumatique, un angle (A_{T1}, A_{T2}), mesuré dans le plan équatorial XZ du pneumatique, dont la valeur absolue est au moins égale à 20°,
- une armature de carcasse comprenant au moins une couche de carcasse comprenant des renforts textiles enrobés dans un matériau élastomérique, parallèles entre eux et formant, avec la direction circonférentielle XX' du pneumatique, un angle A_{C} au moins égal à 85° et au plus égal 95°,
- la bande de roulement ayant un taux d'entaillement volumique T_{EV} au moins égal à 20% et au plus égal à 29% et une hauteur radiale H_{S} des éléments en relief au moins égale à 6.0 mm et au plus égale à 7.6 mm,
- le au moins un mélange élastomérique constitutif de la bande de roulement ayant une température de transition vitreuse T_{g} au moins égale à -18°C et au plus égale à -6°C, une dureté Shore A au moins égale à 60 et au plus égale à 75 et une perte à 60°C au moins égale à 24% et au plus égale à 35% et comprenant un élastomère diénique modifié comprenant au moins un groupe fonctionnel comprenant un atome de silicium, ce dernier se situant au sein de la chaîne principale de l'élastomère y compris les extrémités de chaîne,
- les renforts textiles de la au moins une couche de frettage de l'armature de frettage comprenant un polyamide aromatique, tel que l'aramide,
- et les renforts métalliques de chacune des au moins deux couches de travail de l'armature de travail formant, avec la direction circonférentielle XX' du pneumatique, un angle (A_{T1}, A_{T2}), mesuré dans le plan équatorial XZ du pneumatique, dont la valeur absolue est au moins égale à 25° et au plus égale à 40°.

La bande de roulement selon l'invention a un taux d'entaillement volumique T_{EV} au moins égal à 20% et au plus égal à 29% et une hauteur radiale H_{S} des éléments en relief au moins égale à 6.0 mm et au plus égale à 7.6 mm, alors que la bande de roulement de l'état de la technique de référence a un taux d'entaillement volumique T_{EV} au moins égal à 30% et au plus égal à 32% et une hauteur de sculpture H_{S} au moins égale à 7.5 mm et au plus égale à 8 mm. Par conséquent, le taux d'entaillement volumique T_{EV} et la hauteur radiale H_{S} des éléments en relief de la bande de roulement selon l'invention ont des valeurs inférieures aux caractéristiques correspondantes de la bande de roulement de l'état de la technique pris en référence. Sachant que le volume total Vp des éléments en relief de la bande de roulement, qui caractérise le volume de matière à user, décroît avec le taux d'entaillement T_{EV} et croît avec la hauteur radiale H_{S}, le volume total V_{P} des éléments en relief de la bande de roulement respectivement selon l'invention et selon l'état de la technique sont sensiblement du même niveau. Par conséquent, l'impact du volume de gomme à user sur la performance en usure est proche entre le pneumatique de l'invention et celui de l'état de la technique.

Le mélange élastomérique de la bande de roulement selon l'invention a une température de transition vitreuse T_{g} au moins égale à -18°C et au plus égale à -6°C, une dureté Shore A au moins égale à 60 et au plus égale à 75 et une perte à 60°C au moins égale à 24% et au plus égale à 35%, alors que le mélange élastomérique de la bande de roulement de l'état de la technique pris en référence a une température de transition vitreuse T_{g} au moins égale à -5°C et au plus égale à -1°C, une dureté Shore A au moins égale à 73 et au plus égale à 75, et une perte à 60°C en moyenne égale à 35% et au plus égale à 38%. Par conséquent, la température de transition vitreuse T_{g}, la dureté Shore A et la perte à 60°C du mélange élastomérique de la bande de roulement selon l'invention ont des valeurs pouvant être inférieures aux caractéristiques correspondantes du mélange élastomérique de la bande de roulement de l'état de la technique pris en référence : ce qui permet globalement un gain en adhérence, mais aussi en résistance au roulement.

Du point de vue de sa composition chimique, le mélange élastomérique de la bande de roulement selon l'invention comprend 100 pce (parties pour cent d'élastomère) d'une matrice élastomère comprenant un élastomère diénique modifié. Par définition, un élastomère diénique est un homopolymère ou un copolymère, issu au moins en partie de monomères diènes, c'est-à-dire de monomères porteurs de deux doubles liaisons carbone-carbone conjuguées ou non. Préférentiellement le mélange élastomérique comprend l'élastomère diénique modifié à un taux au moins égal à 20 pce.

L'élastomère diénique modifié selon l'invention comprend au moins un groupe fonctionnel comprenant un atome de silicium, ce dernier se situant au sein de la chaîne principale, y compris les extrémités de chaîne. L'expression « atome se situant au sein de la chaîne principale de l'élastomère, y compris les extrémités de chaîne », s'entend ici comme n'étant pas un atome pendant (ou latéral) le long de la chaîne principale de l'élastomère mais étant un atome intégré à la chaîne principale.

Selon certaines variantes, le groupe fonctionnel comprenant un atome de silicium se situe en une extrémité de la chaîne principale de l'élastomère.

Selon des mises en œuvre de ces variantes, le groupe fonctionnel comprend une fonction silanol. Selon d'autres mises en œuvre, l'atome de silicium du groupe fonctionnel est substitué par au moins une fonction alcoxy, éventuellement totalement ou partielle hydrolysée en hydroxyle.

Selon d'autres variantes, le groupe fonctionnel se situe dans la chaîne élastomère principale, on dira alors que l'élastomère diénique est couplé ou encore fonctionnalisé en milieu de chaîne. L'atome de silicium du groupe fonctionnel lie alors les deux branches de la chaîne principale de l'élastomère diénique. Selon ces variantes, l'atome de silicium du groupe fonctionnel est substitué par au moins une fonction alcoxy, éventuellement totalement ou partielle hydrolysée en hydroxyle.

Selon les variantes de l'invention selon lesquelles le groupe fonctionnel comprend une fonction silanol en extrémité de chaîne, le groupement fonctionnel peut être une fonction silanol ou encore un groupement polysiloxane ayant une extrémité silanol. Des élastomères diéniques modifiés correspondant sont décrits notamment dans les documents EP 0 778 311 A1, WO 2011/042507 A1.

Selon l'une quelconque des variantes de l'invention selon lesquelles l'atome de silicium du groupe fonctionnel est substitué par au moins une fonction alcoxy, éventuellement totalement ou partielle hydrolysée en hydroxyle, l'atome de silicium peut également être substitué, directement ou par l'intermédiaire d'un radical hydrocarboné divalent, par au moins une autre fonction comprenant au moins un hétéroatome choisi parmi N, S, O, P. De préférence, l'atome de silicium est substitué par au moins une autre fonction par l'intermédiaire d'un radical hydrocarboné divalent, plus préférentiellement aliphatique linéaire en C1-C18. On peut, à titre d'exemple, citer parmi ces autres fonctions, les amines primaires, secondaires ou tertiaires, cycliques ou non, les isocyanates, les imines, les cyano, les thiols, les carboxylates, les époxydes, les phosphines primaires, secondaires ou tertiaires. L'autre fonction est de préférence une amine tertiaire, plus préférentiellement un groupement diéthylamino- ou diméthylamino-. La fonction alcoxy est de préférence méthoxy, éthoxy, butoxy ou propoxy. Des élastomères diéniques modifiés correspondant à ces variantes sont décrits notamment dans les documents WO 2009/133068 A1, WO 2015/018743 A1.

La modification de l'élastomère diénique par au moins un groupe fonctionnel comprenant un atome de silicium, n'exclut pas une autre modification de l'élastomère par exemple en extrémité de chaîne par une fonction amine introduite lors de l'initiation de la polymérisation, tel que décrit dans WO 2015/018774 A1, WO 2015/018772 A1.

Préférentiellement, l'élastomère diénique modifié selon l'invention est un polymère de 1,3-butadiène, plus préférentiellement un copolymère de 1,3-butadiène et de styrène (SBR)

L'élastomère diénique modifié selon l'invention peut être, selon différentes variantes, utilisé seul dans le mélange élastomérique ou en coupage avec au moins un autre élastomère diénique conventionnellement utilisé en pneumatique, qu'il soit étoilé, couplé, fonctionnalisé par exemple à l'étain ou au silicium, ou non.

Egalement du point de vue de sa composition chimique, le mélange élastomérique de la bande de roulement selon l'invention comprend une résine plastifiante de type résine thermoplastique à un taux au moins égal à 20 pce.

Par ailleurs, une couche de frettage de l'armature de frettage comprenant des renforts textiles comprenant un polyamide aromatique, tel que l'aramide, et non des renforts textiles constitués par un polyamide aliphatique, tel que le nylon, comme dans l'état de la technique de référence, confère une plus grande rigidité circonférentielle au sommet du pneumatique, ce qui est également favorable à l'adhérence, en particulier sur sol sec. Une telle caractéristique est également avantageuse vis-à-vis de la résistance à l'usure et du comportement, en raison d'une rigidité de dérive plus élevée.

Encore selon l'invention, les renforts métalliques de chacune des au moins deux couches de travail de l'armature de travail formant, avec la direction circonférentielle XX' du pneumatique, un angle (A_{T1}, A_{T2}), mesuré dans le plan équatorial XZ du pneumatique, dont la valeur absolue est au moins égale à 25° et au plus égale à 40°. Dans le pneumatique de l'état de la technique, l'angle (A_{T1}, A_{T2}) a une valeur absolue est généralement au moins égale à 20° et au plus égale à 25°, donc inférieure à celui de l'invention. Par conséquent, la rigidité de dérive du pneumatique selon l'invention est supérieure à celle du pneumatique de l'état de la technique, ce qui confère au pneumatique selon l'invention un avantage en adhérence sur sol mouillé, mais aussi en résistance à l'usure et en bruit.

Ainsi la combinaison des caractéristiques essentielles de l'invention permet d'améliorer, par rapport à un pneumatique de tourisme de l'état de la technique tel que précédemment décrit, les adhérences longitudinale et transversale sur sol mouillé et sur sol sec, tout en maintenant les niveaux de performances en comportement, en particulier à faible accélération transversale, et en usure. Elle permet également avantageusement une diminution de la résistance au roulement du pneumatique, et donc de la consommation en carburant du pneumatique, et une réduction du bruit généré par le pneumatique.

La bande de roulement a de préférence une hauteur radiale H_{S} des éléments en relief au moins égale à 6.5 mm, ce qui permet d'augmenter encore le volume total V_{P} des éléments en relief de la bande de roulement, donc le volume de matière à user, et, par conséquent, d'améliorer la performance en usure.

Les renforts textiles de la au moins une couche de frettage de l'armature de frettage forment préférentiellement, avec la direction circonférentielle XX' du pneumatique, un angle A_{F}, mesuré dans le plan équatorial XZ du pneumatique, au plus égal à 1° en valeur absolue. Cette condition implique que les renforts textiles sont sensiblement circonférentiels et maximisent les effets du frettage.

Encore préférentiellement, l'armature de frettage ayant une largeur axiale L_{F} et l'armature de travail ayant une largeur axiale L_{T}, la largeur axiale L_{F} de l'armature de frettage est au moins égale à la largeur axiale L_{T} de l'armature de travail, de telle sorte que l'armature de frettage est entièrement recouvrante voire débordante par rapport à l'armature de travail. Une armature de frettage au moins aussi large que l'armature de travail a un effet optimum vis-à-vis du frettage.

Selon un premier mode de réalisation de l'armature de frettage, les renforts textiles de la au moins une couche de frettage de l'armature de frettage comprennent une combinaison d'un polyamide aromatique, tel que l'aramide, et d'un polyamide aliphatique, tel que le nylon. De tels renforts sont également appelés renforts hybrides et présentent l'avantage d'avoir un comportement mécanique en extension dit « bi-module », caractérisé par un bas module d'extension, celui du nylon, et donc une grande déformabilité, pour de petits allongements, et un module d'extension élevé et donc une plus faible déformabilité, pour de grands allongements.

Selon un deuxième mode de réalisation de l'armature de frettage, les renforts textiles de la au moins une couche de frettage de l'armature de frettage comprennent une combinaison d'un polyamide aromatique, tel que l'aramide, et d'un polyester, tel que le polyéthylène téréphtalate (PET). De tels renforts sont également des renforts hybrides qui présentent les mêmes avantages que ceux décrits précédemment.

Les renforts métalliques de chacune des au moins deux couches de travail de l'armature de travail forment préférentiellement, avec la direction circonférentielle XX' du pneumatique, un angle (A_{T1}, A_{T2}), mesuré dans le plan équatorial XZ du pneumatique, dont la valeur absolue est au moins égale à 27° et au plus égale à 33°. Comme décrit précédemment, un tel intervalle d'angle confère au pneumatique une rigidité de dérive garantissant une performance satisfaisante en adhérence sur sol mouillé, mais aussi en résistance à l'usure et en bruit.

Avantageusement une couche intermédiaire comprenant au moins un mélange élastomérique est positionnée radialement à l'intérieur de la bande de roulement et radialement à l'extérieur de l'armature de frettage. Le pneumatique de l'état de la technique de référence ne comprend pas une telle couche intermédiaire qui permet d'optimiser en particulier la résistance au roulement.

Egalement avantageusement la couche intermédiaire a une épaisseur radiale E au moins égale à 0.3 mm et au plus égale à 4.0 mm. Une telle épaisseur garantit un gain en résistance au roulement par rapport à l'état de la technique, c'est-à-dire une diminution de la résistance au roulement.

Encore avantageusement, le au moins un mélange élastomérique, constitutif de la couche intermédiaire ayant une dureté Shore A et une perte à 60°C, le au moins un mélange élastomérique, constitutif de la couche intermédiaire, a une dureté Shore A au moins égale à 63 et au plus égale à 69 et une perte à 60°C au moins égale à égale à 10% et au plus égale à 16%. Ces caractéristiques ont des valeurs inférieures à celles du mélange élastomérique de la bande de roulement et permettent donc de diminuer encore la résistance au roulement.

Selon une variante de réalisation de la couche intermédiaire, la couche intermédiaire est dissymétrique par rapport au plan équatorial XZ du pneumatique, de telle sorte que la surface S₁ de la section méridienne de la portion de couche intermédiaire, axialement positionnée dans la moitié de pneumatique destinée à être montée du côté intérieur du véhicule, est au moins égale à 1,05 fois et au plus égale à 1,15 fois la surface S₂ de la section méridienne de la portion de couche intermédiaire, axialement positionnée dans la moitié de pneumatique destinée à être montée du côté extérieur du véhicule. Ceci implique que le volume de la portion de couche intermédiaire est plus élevé pour la moitié de pneumatique positionnée côté intérieur du véhicule que pour la moitié de pneumatique positionnée côté extérieur du véhicule. Ceci permet d'améliorer l'endurance du sommet du pneumatique, en roulage sur circuit, tout en conservant le même niveau de résistance au roulement.

Selon une première variante de réalisation de la sculpture, l'agencement des éléments en relief de la bande de roulement est dissymétrique par rapport au plan équatorial XZ du pneumatique, de telle sorte que le taux d'entaillement volumique T_{EV1} de la moitié de bande de roulement destinée à être montée du côté intérieur du véhicule est au moins égal à 1.3 fois et au plus égal à 2 fois le taux d'entaillement volumique T_{EV2} de la moitié de bande de roulement destinée à être montée du côté extérieur du véhicule. De préférence, le taux d'entaillement volumique T_{EV1} de la moitié de bande de roulement destinée à être montée du côté intérieur du véhicule est au moins égal à 1.5 fois et au plus égal à 1.8 fois le taux d'entaillement volumique T_{EV2} de la moitié de bande de roulement destinée à être montée du côté extérieur du véhicule. Un agencement dissymétrique des éléments en relief de la bande de roulement permet d'améliorer l'adhérence transversale sur sol sec, ainsi que les formes d'usure associées, sans dégrader l'adhérence transversale sur sol mouillé grâce à un taux d'entaillement volumique global du même niveau que celui de la bande de roulement du pneumatique de l'état de la technique pris en référence.

Selon une deuxième variante de réalisation de la sculpture, les éléments en relief de la bande de roulement comprenant chacun une face radialement extérieure, positionnée sur la surface de roulement, appelée face de contact, la face de contact de tout élément en relief de la bande de roulement comprend au moins un chanfrein ayant une hauteur radiale H_{CH} au moins égale à 1 mm et au plus égale à 2 mm et formant, avec la surface de roulement, un angle A_{CH} au moins égale à 45°. La hauteur radiale H_{CH} et l'angle A_{CH} sont de préférence variables le long de la face de contact. La présence de chanfreins sur la face de contact des éléments en relief entraîne une baisse de la pression locale de contact au niveau de l'arête d'attaque, ce qui contribue à améliorer encore l'adhérence sur sol sec et également à retarder l'apparition des formes d'usure en usage agressif.

Selon un mode de réalisation particulier, les renforts métalliques de chacune des au moins deux couches de travail de l'armature de travail sont constitués par des mono-filaments, qui sont plus légers et présentent une meilleure tenue en compression que les assemblages usuels de fils métalliques. Un mono-filament est constitué par un fil métallique unique.

L'armature de carcasse comprenant généralement au moins une couche de carcasse comprenant des renforts le plus souvent en matériau textile, enrobés dans un matériau élastomérique et parallèles entre eux, elle comprend de préférence soit une couche de carcasse unique soit deux couches de carcasse. Encore préférentiellement, les renforts textiles de couche de carcasse sont en polyéthylène téréphtalate (PET).

Selon un mode de réalisation particulier, l'armature de renforcement du pneumatique a une architecture de type « shoulder lock », caractérisée par une armature de carcasse comprenant une couche de carcasse dite retournée, c'est-à-dire s'enroulant dans chaque bourrelet du pneumatique autour d'un élément de renforcement circonférentiel ou tringle pour former un retournement dont l'extrémité libre vient en contact avec la face radialement intérieure de l'armature de sommet.

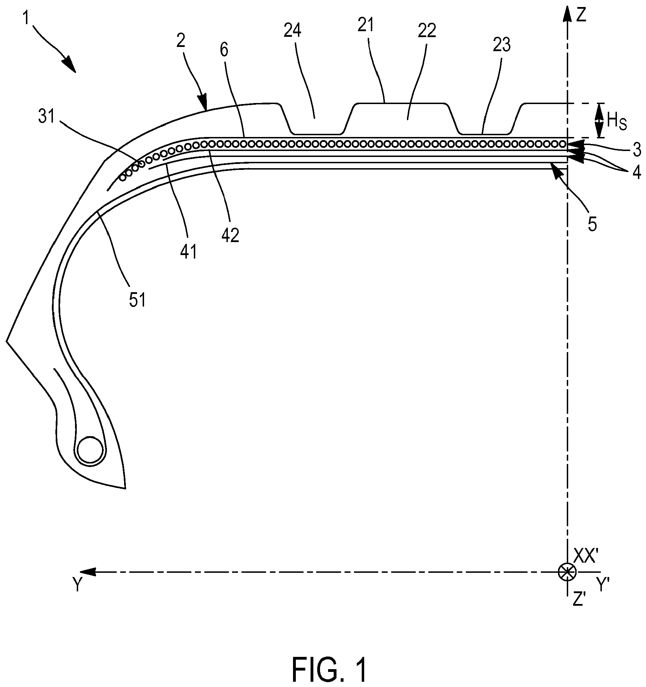

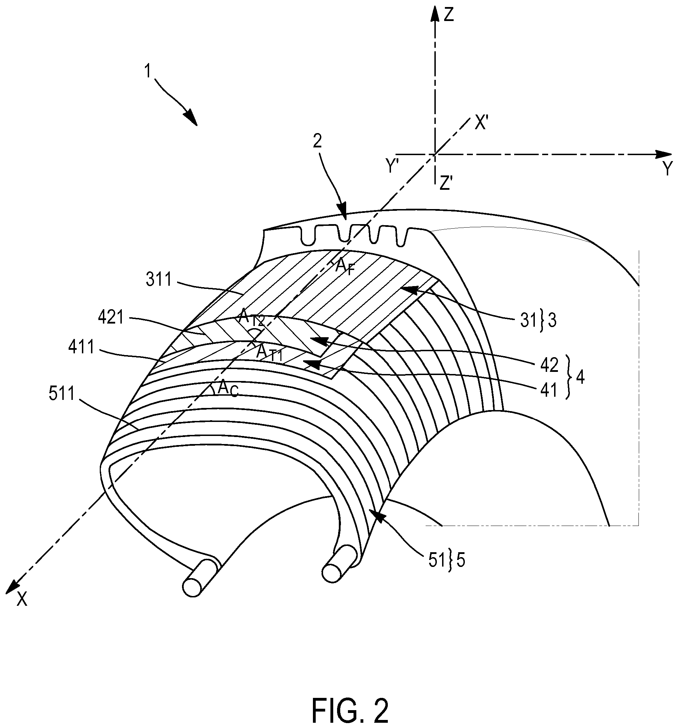

L'invention est illustrée par les figures 1 et 2, non représentées à l'échelle et décrites ci-après :
- Figure 1: demi-coupe méridienne d'un pneumatique selon l'invention.
- Figure 2: coupe en perspective d'un pneumatique selon l'invention.

La figure 1 représente une demi-coupe méridienne, dans un plan méridien YZ, d'un pneumatique 1 pour véhicule de tourisme selon l'invention. Le pneumatique 1 comprend, le plus radialement à l'extérieur, une bande de roulement 2, destinée à entrer en contact avec un sol par l'intermédiaire d'une surface de roulement 21 et comprenant des éléments en relief 22 s'étendant radialement vers l'extérieur à partir d'une surface de fond 23 jusqu'à la surface de roulement 21 sur une hauteur radiale H_{S} mesurée dans un plan équatorial XZ du pneumatique. Les éléments en relief 22 ont un volume total V_{P} et sont séparés par des creux 24 ayant un volume total V_{C}. La bande de roulement 2 a un taux d'entaillement volumique T_{EV}, défini comme le rapport entre le volume total V_{C} des creux 24 et la somme du volume total V_{C} des creux 24 et du volume total V_{P} des éléments en relief 22. La bande de roulement 2 est constituée par un mélange élastomérique ayant une température de transition vitreuse T_{g}, une dureté Shore A et une perte à 60°C. Le pneumatique 1 comprend en outre, selon un mode particulier de réalisation de l'invention, une couche intermédiaire 6 comprenant mélange élastomérique et positionnée radialement à l'intérieur de la bande de roulement 2 et radialement à l'extérieur de l'armature de frettage 3. Le pneumatique 1 comprend également une armature de frettage 3, radialement intérieure à la couche intermédiaire 6 et comprenant une couche de frettage 31, une armature de travail 4, radialement intérieure à l'armature de frettage 3 et comprenant deux couches de travail (41, 42) radialement superposées, et, enfin, une armature de carcasse 5 comprenant une couche de carcasse 51.

La figure 2 représente une coupe en perspective d'un pneumatique selon l'invention. La couche de frettage 31 comprend des renforts textiles 311 enrobés dans un mélange élastomérique, parallèles entre eux et formant, avec une direction circonférentielle XX' du pneumatique, un angle A_{F}, mesuré dans le plan équatorial XZ du pneumatique, au plus égal à 5° en valeur absolue. Les deux couches de travail (41, 42) comprennent chacune des renforts métalliques (411, 421) enrobés dans un mélange élastomérique, parallèles entre eux dans chaque couche et croisés d'une couche à la suivante, en formant, avec la direction circonférentielle XX' du pneumatique, un angle (A_{T1}, A_{T2}), mesuré dans le plan équatorial XZ du pneumatique, dont la valeur absolue est au moins égale à 20°. La couche de carcasse 51 comprend des renforts textiles 511 enrobés dans un matériau élastomérique, parallèles entre eux et formant, avec la direction circonférentielle XX' du pneumatique, un angle A_{C} au moins égal à 85° et au plus égal 95°.

Selon une première caractéristique essentielle de l'invention, la bande de roulement 2 a un taux d'entaillement volumique T_{EV} au moins égal à 20% et au plus égal à 29% et une hauteur radiale H_{S} des éléments en relief 22 au moins égale à 6.0 mm et au plus égale à 7.6 mm. Selon une deuxième caractéristique essentielle de l'invention, le mélange élastomérique constitutif de la bande de roulement 2 a une température de transition vitreuse T_{g} au moins égale à -18°C et au plus égale à -6°C, une dureté Shore A au moins égale à 60 et au plus égale à 75 et une perte à 60°C au moins égale à 24% et au plus égale à 35%. Selon une troisième caractéristique essentielle de l'invention, les renforts textiles 311 de la couche de frettage 31 de l'armature de frettage 3 comprennent un polyamide aromatique, tel que l'aramide. Selon une quatrième caractéristique essentielle de l'invention, les renforts métalliques de chacune des deux couches de travail (41, 42) de l'armature de travail 4 forment, avec la direction circonférentielle XX' du pneumatique, un angle (A_{T1}, A_{T2}), mesuré dans le plan équatorial XZ du pneumatique, dont la valeur absolue est au moins égale à 25° et au plus égale à 40°.

L'invention a été plus particulièrement étudiée pour un pneumatique de tourisme de dimension 225/40 R18. Un pneumatique de référence R a été comparé à un premier pneumatique A selon l'invention et à un second pneumatique B selon l'invention.

La bande de roulement du pneumatique de référence R comprend des éléments en relief s'étendant radialement sur une hauteur radiale H_{S} égale à 7.6 mm. Le taux d'entaillement volumique T_{EV} de la bande de roulement est égal à 31%. Le mélange élastomérique constitutif de la bande de roulement a une température de transition vitreuse T_{g} égale à -3°C, une dureté Shore A égale à 74 et une perte à 60°C égale à 35%. La bande de roulement du pneumatique de référence R ne comprend pas d'élastomère diénique modifié comprenant au moins un groupe fonctionnel comprenant un atome de silicium, ce dernier se situant au sein de la chaîne principale de l'élastomère y compris les extrémités de chaîne. Le pneumatique de référence R ne comprend pas de couche intermédiaire radialement à l'intérieur de la bande de roulement et radialement à l'extérieur de l'armature de frettage. L'armature de frettage comprend une couche de frettage dont les renforts textiles sont en nylon de titre 140/2 (assemblage de 2 surtors de 140 tex chacun, 1 tex étant la masse en g de 1000 m de fil). L'armature de travail comprend deux couches de travail radialement superposées. Les renforts métalliques de formule (2+2).26 (assemblage torsadé de deux paires de deux fils métalliques ayant chacun un diamètre égal à 0.26 mm) de la couche de travail radialement la plus intérieure et de la couche de travail radialement la plus extérieure forment, avec la direction circonférentielle XX' du pneumatique, un angle (A_{T1}, A_{T2}), mesuré dans le plan équatorial XZ du pneumatique, respectivement égal à +27° et -27°. L'armature de carcasse est constituée par une couche de carcasse dont les renforts textiles sont en polyéthylène téréphtalate (PET) de titre 220/2 (assemblage de 2 surtors de 220 tex chacun), avec une torsion de 240 tours/m et répartis dans la couche de carcasse avec une densité de 96 fils/dm.

La bande de roulement du pneumatique A selon l'invention comprend des éléments en relief s'étendant radialement sur une hauteur radiale H_{S} égale à 7.5 mm. Le taux d'entaillement volumique T_{EV} de la bande de roulement est égal à 26.5%. Le mélange élastomérique constitutif de la bande de roulement a une température de transition vitreuse T_{g} égale à -16°C, une dureté Shore A égale à 63 et une perte à 60°C égale à 26%. La bande de roulement du pneumatique A selon l'invention comprend un élastomère diénique modifié comprenant au moins un groupe fonctionnel comprenant une fonction silanol, ce dernier se situant en extrémité de chaîne. Le pneumatique A selon l'invention comprend en outre une couche intermédiaire, radialement à l'intérieur de la bande de roulement et radialement à l'extérieur de l'armature de frettage, constituée par un mélange élastomérique ayant une dureté Shore A égale à 66 et une perte à 60°C égale à 14%. L'armature de frettage comprend une couche de frettage dont les renforts textiles comprennent une combinaison de fils en aramide et de fils en nylon de titre A167/N140 (assemblage d'un surtors en aramide de 167 tex et d'un surtors en nylon de 140 tex). L'armature de travail comprend deux couches de travail radialement superposées. Les renforts métalliques de formule (2+2).26 (assemblage torsadé de deux paires de deux fils métalliques ayant chacun un diamètre égal à 0.26 mm) de la couche de travail radialement la plus intérieure et de la couche de travail radialement la plus extérieure forment, avec la direction circonférentielle XX' du pneumatique, un angle (A_{T1}, A_{T2}), mesuré dans le plan équatorial XZ du pneumatique, respectivement égal à +29° et -29°. L'armature de carcasse est constituée par une couche de carcasse dont les renforts textiles sont en polyéthylène téréphtalate (PET) de titre 334/2 (assemblage de 2 surtors de 334 tex chacun), avec une torsion de 270 tours/m et répartis dans la couche de carcasse avec une densité de 80 fils/dm.

La bande de roulement du pneumatique B selon l'invention comprend des éléments en relief s'étendant radialement sur une hauteur radiale H_{S} égale à 7.5 mm. Le taux d'entaillement volumique T_{EV} de la bande de roulement est égal à 26.5%. Le mélange élastomérique constitutif de la bande de roulement a une température de transition vitreuse T_{g} égale à -9°C, une dureté Shore A égale à 72 et une perte à 60°C égale à 33%. La bande de roulement du pneumatique B selon l'invention comprend un élastomère diénique modifié comprenant au moins un groupe fonctionnel comprenant un atome de silicium, ce dernier se situant en milieu de chaîne et étant substitué par une amine tertiaire. Le pneumatique B selon l'invention comprend en outre une couche intermédiaire, radialement à l'intérieur de la bande de roulement et radialement à l'extérieur de l'armature de frettage, constituée par un mélange élastomérique ayant une dureté Shore A égale à 66 et une perte à 60°C égale à 14%. L'armature de frettage comprend une couche de frettage dont les renforts textiles comprennent une combinaison de fils en aramide et de fils en nylon de titre A167/N140 (assemblage d'un surtors en aramide de 167 tex et d'un surtors en nylon de 140 tex) avec une torsion de 290 tours/m et répartis dans la couche de carcasse avec une densité de 98 fils/dm. L'armature de travail comprend deux couches de travail radialement superposées. Les renforts métalliques de (2+2).26 (assemblage torsadé de deux paires de deux fils métalliques ayant chacun un diamètre égal à 0.26 mm) de la couche de travail radialement la plus intérieure et de la couche de travail radialement la plus intérieure forment, avec la direction circonférentielle XX' du pneumatique, un angle (A_{T1}, A_{T2}), mesuré dans le plan équatorial XZ du pneumatique, respectivement égal à +29° et -29°. L'armature de carcasse est constituée par une couche de carcasse dont les renforts textiles sont en polyéthylène téréphtalate (PET) de titre 334/2 (assemblage de 2 surtors de 334 tex chacun), avec une torsion de 270 tours/m et répartis dans la couche de carcasse avec une densité de 80 fils/dm.

Les pneumatiques A, B et R ont été soumis à divers tests et mesures comparatifs dont les résultats en pourcentage des résultats du pneumatique de référence R (base 100) sont présentés dans le tableau 1 ci-dessous:

**Tableau 1**

| Performance | Pneumatique A | Pneumatique B |
|---|---|---|
| Adhérence longitudinale (distance de freinage) sur sol sec | 102 | 103.5 |
| Adhérence longitudinale (distance de freinage) sur sol mouillé | 103.5 | 107 |
| Adhérence transversale (temps pour réaliser un tour de circuit) sur sol sec | 100.5 | 101 |
| Adhérence transversale (temps pour réaliser un tour de circuit) sur sol mouillé | 97 | 102 |
| Rigidité latérale à faible accélération (ou rigidité de dérive) | 102 | 105 |
| Résistance au roulement | 116 | 118 |
| Usure | 100 | 115 |

Par rapport au pneumatique R de l'état de la technique pris en référence, les pneumatiques A et B selon l'invention présentent une amélioration en adhérence longitudinale sur sol mouillé et sur sol sec, une performance équivalente en adhérence transversale sur sol mouillé et sur sol sec (avec une légère dégradation sur sol mouillé pour le pneumatique A), une amélioration du comportement résultant d'une augmentation de la rigidité latérale à faible accélération, une forte amélioration de la résistance au roulement, une performance équivalente en usure pour le pneumatique A et un gain en usure pour le pneumatique B.

## Revendications

1. Pneumatique (1) pour véhicule de tourisme comprenant :
- une bande de roulement (2), destinée à entrer en contact avec un sol par l'intermédiaire d'une surface de roulement (21) et comprenant des éléments en relief (22) s'étendant radialement vers l'extérieur à partir d'une surface de fond (23) jusqu'à la surface de roulement (21) sur une hauteur radiale H_{S} mesurée dans un plan équatorial XZ du pneumatique, les éléments en relief (22) ayant un volume total V_{P} et étant séparés par des creux (24) ayant un volume total V_{C}, la bande de roulement (2) ayant un taux d'entaillement volumique T_{EV}, défini comme le rapport entre le volume total V_{C} des creux (24) et la somme du volume total V_{C} des creux (24) et du volume total V_{P} des éléments en relief (22), la bande de roulement (2) comprenant en outre au moins un mélange élastomérique ayant une température de transition vitreuse T_{g}, une dureté Shore A et une perte à 60°C,
- une armature de frettage (3), radialement intérieure à la bande de roulement (2), comprenant au moins une couche de frettage (31) comprenant des renforts textiles (311) enrobés dans un mélange élastomérique, parallèles entre eux et formant, avec une direction circonférentielle XX' du pneumatique, un angle A_{F}, mesuré dans le plan équatorial XZ du pneumatique, au plus égal à 5° en valeur absolue,
- une armature de travail (4), radialement intérieure à l'armature de frettage (3), comprenant au moins deux couches de travail (41, 42), radialement superposées, comprenant des renforts métalliques (411, 421) enrobés dans un mélange élastomérique, parallèles entre eux dans chaque couche et croisés d'une couche à la suivante, en formant, avec la direction circonférentielle XX' du pneumatique, un angle (A_{T1}, A_{T2}), mesuré dans le plan équatorial XZ du pneumatique, dont la valeur absolue est au moins égale à 20°,
- une armature de carcasse (5) comprenant au moins une couche de carcasse (51) comprenant des renforts textiles (511) enrobés dans un matériau élastomérique, parallèles entre eux et formant, avec la direction circonférentielle XX' du pneumatique, un angle A_{C} au moins égal à 85° et au plus égal 95°,
**caractérisé en ce que** la bande de roulement (2) a un taux d'entaillement volumique T_{EV} au moins égal à 20% et au plus égal à 29% et une hauteur radiale H_{S} des éléments en relief (22) au moins égale à 6.0 mm et au plus égale à 7.6 mm, **en ce que** le au moins un mélange élastomérique constitutif de la bande de roulement (2) a une température de transition vitreuse T_{g} au moins égale à -18°C et au plus égale à -6°C, une dureté Shore A au moins égale à 60 et au plus égale à 75, une perte à 60°C au moins égale à 24% et au plus égale à 35%, et comprend un élastomère diénique modifié comprenant au moins un groupe fonctionnel comprenant un atome de silicium, ce dernier se situant au sein de la chaîne principale de l'élastomère y compris les extrémités de chaîne,
**en ce que** les renforts textiles (311) de la au moins une couche de frettage (31) de l'armature de frettage (3) comprennent un polyamide aromatique, tel que l'aramide, **et en ce que** les renforts métalliques (411, 421) de chacune des au moins deux couches de travail (41, 42) de l'armature de travail (4) forment, avec la direction circonférentielle XX' du pneumatique, un angle (A_{T1}, A_{T2}), mesuré dans le plan équatorial XZ du pneumatique, dont la valeur absolue est au moins égale à 25° et au plus égale à 40°.

2. Pneumatique (1) selon la revendication précédente, **dans lequel** la bande de roulement (2) a une hauteur radiale H_{S} des éléments en relief (22) au moins égale à 6.5 mm.

3. Pneumatique (1) selon l'une quelconque des revendications précédentes, **dans lequel** les renforts textiles (311) de la au moins une couche de frettage (31) de l'armature de frettage (3) forment, avec la direction circonférentielle XX' du pneumatique, un angle A_{F}, mesuré dans le plan équatorial XZ du pneumatique, au plus égal à 1° en valeur absolue.

4. Pneumatique (1) selon l'une quelconque des revendications précédentes, l'armature de frettage (3) ayant une largeur axiale L_{F} et l'armature de travail (4) ayant une largeur axiale L_{T}, **dans lequel** la largeur axiale L_{F} de l'armature de frettage (3) est au moins égale à la largeur axiale L_{T} de l'armature de travail (4), de telle sorte que l'armature de frettage (3) soit entièrement recouvrante ou débordante par rapport à l'armature de travail (4).

5. Pneumatique (1) selon l'une quelconque des revendications 1 à 4, **dans lequel** les renforts textiles (311) de la au moins une couche de frettage (31) de l'armature de frettage (3) comprennent une combinaison d'un polyamide aromatique, tel que l'aramide, et d'un polyamide aliphatique, tel que le nylon.

6. Pneumatique (1) selon l'une quelconque des revendications 1 à 4, **dans lequel** les renforts textiles (311) de la au moins une couche de frettage (31) de l'armature de frettage (3) comprennent une combinaison d'un polyamide aromatique, tel que l'aramide, et d'un polyester, tel que le polyéthylène téréphtalate (PET).

7. Pneumatique (1) selon l'une quelconque des revendications précédentes, **dans lequel** les renforts métalliques (411, 421) de chacune des au moins deux couches de travail (41, 42) de l'armature de travail (4) forment, avec la direction circonférentielle XX' du pneumatique, un angle (A_{T1}, A_{T2}), mesuré dans le plan équatorial XZ du pneumatique, dont la valeur absolue est au moins égale à 27° et au plus égale à 33°.

8. Pneumatique (1) selon l'une quelconque des revendications précédentes, **dans lequel** une couche intermédiaire (6) comprenant au moins un mélange élastomérique est positionnée radialement à l'intérieur de la bande de roulement (2) et radialement à l'extérieur de l'armature de frettage (3).

9. Pneumatique (1) selon la revendication précédente, **dans lequel** la couche intermédiaire (6) a une épaisseur radiale E au moins égale à 0.3 mm et au plus égale à 4.0 mm.

10. Pneumatique (1) selon l'une quelconque des revendications 8 ou 9, le au moins un mélange élastomérique, constitutif de la couche intermédiaire (6) ayant une dureté Shore A et une perte à 60°C, **dans lequel** le au moins un mélange élastomérique, constitutif de la couche intermédiaire (6), a une dureté Shore A au moins égale à 63 et au plus égale à 69 et une perte à 60°C au moins égale à 10% et au plus égale à 16%.

11. Pneumatique (1) selon l'une quelconque des revendications 8 à 10, **dans lequel** la couche intermédiaire (6) est dissymétrique par rapport au plan équatorial XZ du pneumatique, de telle sorte que la surface S₁ de la section méridienne de la portion (61) de couche intermédiaire (6), axialement positionnée dans la moitié de pneumatique destinée à être montée du côté intérieur du véhicule, est au moins égale à 1,05 fois et au plus égale à 1,15 fois la surface S₂ de la section méridienne de la portion (62) de couche intermédiaire (6), axialement positionnée dans la moitié de pneumatique destinée à être montée du côté extérieur du véhicule.

12. Pneumatique (1) selon l'une quelconque des revendications précédentes, **dans lequel** l'agencement des éléments en relief (22) de la bande de roulement (2) est dissymétrique par rapport au plan équatorial XZ du pneumatique, de telle sorte que le taux d'entaillement volumique T_{EV1} de la moitié de bande de roulement destinée à être montée du côté intérieur du véhicule est au moins égal à 1.3 fois et au plus égal à 2 fois le taux d'entaillement volumique T_{EV2} de la moitié de bande roulement destinée à être montée du côté extérieur du véhicule.

13. Pneumatique (1) selon l'une quelconque des revendications précédentes, les éléments en relief (22) de la bande de roulement (2) comprenant chacun une face radialement extérieure, positionnée sur la surface de roulement (21), appelée face de contact (221), **dans lequel** la face de contact (221) de tout élément en relief (22) de la bande de roulement (2) comprend au moins un chanfrein ayant une hauteur radiale H_{CH} au moins égale à 1 mm et au plus égale à 2 mm et formant, avec la surface de roulement (21), un angle A_{CH} au moins égale à 45°.

## Patentansprüche

1. Reifen (1) für ein kraftfahrzeug, umfassend:
- einen Laufstreifen (2), der dazu bestimmt ist, über eine Lauffläche (21) mit einem Boden in Kontakt zu treten, und Reliefelemente (22) umfasst, die sich von einer Grundfläche (23) über eine in einer Äquatorialebene XZ des Reifens gemessene radiale Höhe H_{S} radial nach außen bis zur Lauffläche (21) erstrecken, wobei die Reliefelemente (22) ein Gesamtvolumen V_{P} aufweisen und durch Vertiefungen (24) mit einem Gesamtvolumen V_{C} getrennt sind, wobei der Laufstreifen (2) einen Negativprofilanteil T_{EV} aufweist, der als das Verhältnis zwischen dem Gesamtvolumen V_{C} der Vertiefungen (24) und der Summe des Gesamtvolumens V_{C} der Vertiefungen (24) und des Gesamtvolumens V_{P} der Reliefelemente (22) definiert ist, wobei der Laufstreifen (2) ferner mindestens eine Elastomermischung mit einer Glasübergangstemperatur T_{g}, einer Shore-Härte A und einem Verlust bei 60°C umfasst,
- eine Umhüllungsbewehrung (3) radial innerhalb des Laufstreifens (2), die mindestens eine Umhüllungsschicht (31) umfasst, die textile Verstärkungen (311) umfasst, die in eine Elastomermischung eingebettet sind, parallel zueinander sind und mit einer Umfangsrichtung XX' des Reifens einen in der Äquatorialebene XZ des Reifens gemessenen Winkel A_{F} ausbilden, dessen absoluter Wert höchstens gleich 5° ist,
- eine Arbeitsbewehrung (4) radial innerhalb der Umhüllungsbewehrung (3), die mindestens zwei radial übereinanderliegende Arbeitsschichten (41, 42) umfasst, die Metallverstärkungen (411, 421) umfassen, die in eine Elastomermischung eingebettet sind, in jeder Schicht parallel zueinander sind, einander von einer Schicht zur nächsten überkreuzen und mit der Umfangsrichtung XX' des Reifens einen in der Äquatorialebene XZ des Reifens gemessenen Winkel (A_{T1}, A_{T2}) aufweisen, dessen absoluter Wert mindestens gleich 20° ist,
- eine Karkassenbewehrung (5), die mindestens eine Karkassenschicht (51) umfasst, die textile Verstärkungen (511) umfasst, die in ein Elastomermaterial eingebettet sind, parallel zueinander sind und mit der Umfangsrichtung XX' des Reifens einen Winkel A_{C} von mindestens gleich 85° und höchstens gleich 95° ausbilden,
**dadurch gekennzeichnet, dass** der Laufstreifen (2) einen Negativprofilanteil T_{EV} von mindestens gleich 20 % und höchstens gleich 29 % und eine radiale Höhe H_{S} der Reliefelemente (22) von mindestens gleich 6,0 mm und höchstens gleich 7,6 mm aufweist, dass die mindestens eine Elastomermischung, die den Laufstreifen (2) bildet, eine Glasübergangstemperatur T_{g} von mindestens gleich -18°C und höchstens gleich -6°C, eine Shore-Härte A von mindestens gleich 60 und höchstens gleich 75, einen Verlust bei 60°C von mindestens gleich 24 % und höchstens gleich 35 % aufweist und ein modifiziertes Dienelastomer umfasst, das mindestens eine funktionelle Gruppe umfasst, die ein Siliciumatom umfasst, wobei sich Letzteres innerhalb der Hauptkette des Elastomers, einschließlich der Kettenenden, befindet,
dass die textilen Verstärkungen (311) der mindestens einen Umhüllungsschicht (31) der Umhüllungsbewehrung (3) ein aromatische Polyamid, wie Aramid, umfassen und dass die Metallverstärkungen (411, 421) jeder der mindestens zwei Arbeitsschichten (41, 42) der Arbeitsbewehrung (4) mit der Umfangsrichtung XX' des Reifens einen in der Äquatorialebene XZ des Reifens gemessenen Winkel (A_{T1}, A_{T2}) aufweisen, dessen absoluter Wert mindestens gleich 25° und höchstens gleich 40° ist.

2. Reifen (1) nach dem vorangehenden Anspruch, wobei der Laufstreifen (2) eine radiale Höhe H_{S} der Reliefelemente (22) von mindestens gleich 6,5 mm aufweist.

3. Reifen (1) nach einem der vorangehenden Ansprüche, wobei die textilen Verstärkungen (311) der mindestens einen Umhüllungsschicht (31) der Umhüllungsbewehrung (3) mit der Umfangsrichtung XX' des Reifens einen in der Äquatorialebene XZ des Reifens gemessenen Winkel A_{F} aufweisen, dessen absoluter Wert höchstens gleich 1° ist.

4. Reifen (1) nach einem der vorangehenden Ansprüche, wobei die Umhüllungsbewehrung (3) eine axiale Breite L_{F} aufweist und die Arbeitsbewehrung (4) eine axiale Breite L_{T} aufweist, wobei die axiale Breite L_{F} der Umhüllungsbewehrung (3) mindestens gleich der axialen Breite LT der Arbeitsbewehrung (4) ist, so dass die Umhüllungsbewehrung (3) die Arbeitsbewehrung (4) vollständig bedeckt oder über diese vorsteht.

5. Reifen (1) nach einem der Ansprüche 1 bis 4, wobei die textilen Verstärkungen (311) der mindestens einen Umhüllungsschicht (31) der Umhüllungsbewehrung (3) eine Kombination aus einem aromatischen Polyamid, wie Aramid, und einem aliphatischen Polyamid, wie Nylon, umfassen.

6. Reifen (1) nach einem der Ansprüche 1 bis 4, wobei die textilen Verstärkungen (311) der mindestens einen Umhüllungsschicht (31) der Umhüllungsbewehrung (3) eine Kombination aus einem aromatischen Polyamid, wie Aramid, und einem Polyester, wie Polyethylenterephthalat (PET), umfassen.

7. Reifen (1) nach einem der vorangehenden Ansprüche, wobei die Metallverstärkungen (411, 421) jeder der mindestens zwei Arbeitsschichten (41, 42) der Arbeitsbewehrung (4) mit der Umfangsrichtung XX' des Reifens einen in der Äquatorialebene XZ des Reifens gemessenen Winkel (A_{T1}, A_{T2}) ausbilden, dessen absoluter Wert mindestens gleich 27° und höchstens gleich 33° ist.

8. Reifen (1) nach einem der vorangehenden Ansprüche, wobei radial innerhalb des Laufstreifens (2) und radial außerhalb der Umhüllungsbewehrung (3) eine Zwischenschicht (6) positioniert ist, die mindestens eine Elastomermischung umfasst.

9. Reifen (1) nach dem vorangehenden Anspruch, wobei die Zwischenschicht (6) eine radiale Dicke E von mindestens gleich 0,3 mm und höchstens gleich 4,0 mm aufweist.

10. Reifen (1) nach einem der Ansprüche 8 oder 9, wobei die mindestens eine Elastomermischung, die die Zwischenschicht (6) bildet, eine Shore-Härte A und einen Verlust bei 60°C aufweist, wobei die mindestens eine Elastomermischung, die die Zwischenschicht (6) bildet, eine Shore-Härte A von mindestens gleich 63 und höchstens gleich 69 und einen Verlust bei 60°C von mindestens gleich 10 % und höchstens gleich 16 % aufweist.

11. Reifen (1) nach einem der Ansprüche 8 bis 10, wobei die Zwischenschicht (6) in Bezug auf die Äquatorialebene XZ des Reifens asymmetrisch ist, so dass die Meridianquerschnittsfläche S₁ des Abschnitts (61) der Zwischenschicht (6), der axial in der zur Montage auf der Fahrzeuginnenseite vorgesehenen Reifenhälfte angeordnet ist, mindestens das 1,05-fache und höchstens das 1,15-fache der Meridianquerschnittsfläche S₂ des Abschnitts (62) der Zwischenschicht (6), der axial in der zur Montage auf der Fahrzeugaußenseite vorgesehenen Reifenhälfte angeordnet ist, beträgt.

12. Reifen (1) nach einem der vorangehenden Ansprüche, wobei die Anordnung der Reliefelemente (22) des Laufstreifens (2) in Bezug auf die Äquatorialebene XZ des Reifens asymmetrisch ist, so dass der Negativprofilanteil T_{EV1} der zur Montage auf der Fahrzeuginnenseite vorgesehenen Laufstreifenhälfte mindestens das 1,3-fache und höchstens das 2-fache des Negativprofilanteils T_{EV2} der zur Montage auf der Fahrzeugaußenseite vorgesehenen Laufstreifenhälfte beträgt.

13. Reifen (1) nach einem der vorangehenden Ansprüche, wobei die Reliefelemente (22) des Laufstreifens (2) jeweils eine radial äußere Fläche aufweisen, die auf der Lauffläche (21) angeordnet ist und als Kontaktfläche (221) bezeichnet werden, wobei die Kontaktfläche (221) jedes Reliefelements (22) des Laufstreifens (2) mindestens eine Fase aufweist, die eine radiale Höhe H_{CH} von mindestens gleich 1 mm und höchstens gleich 2 mm aufweist und mit der Lauffläche (21) einen Winkel A_{CH} von mindestens gleich 45° ausbildet.

## Claims

1. Tyre (1) for a passenger vehicle, comprising:
- a tread (2), intended to come into contact with a ground via a tread surface (21) and comprising raised elements (22) extending radially outwards from a base surface (23) as far as the tread surface (21) over a radial height H_{S} measured in an equatorial plane XZ of the tyre, the raised elements (22) having a total volume V_{P} and being separated by voids (24) having a total volume V_{C}, the tread (2) having a volume voids ratio T_{EV}, defined as being the ratio between the total volume V_{C} of the voids (24) and the sum of the total volume V_{C} of the voids (24) and of the total volume V_{P} of the raised elements (22), a tread (2) further comprising at least one elastomer compound having a glass transition temperature T_{g}, a Shore A hardness and a loss at 60°C,
- a hoop reinforcement (3), radially on the inside of the tread (2) comprising at least one hooping layer (31) comprising textile reinforcers (311) coated in an elastomer compound, these being mutually parallel and making, with a circumferential direction XX' of the tyre, an angle A_{F}, measured in the equatorial plane XZ of the tyre, and most equal to 5° in terms of absolute value,
- a working reinforcement (4), radially on the inside of the hoop reinforcement (3), comprising at least two radially superposed working layers (41, 42) comprising metal reinforcers (411, 421) coated in an elastomer compound, these reinforcers being mutually parallel in each layer and crossed from one layer to the next and forming, with the circumferential direction XX' of the tyre, an angle (A_{T1}, A_{T2}), measured in the equatorial plane XZ of the tyre, of which the absolute value is at least equal to 20°,
- a carcass reinforcement (5) comprising at least one carcass layer (51) comprising textile reinforcers (511) coated in an elastomer material, these reinforcers being mutually parallel and forming, with the circumferential direction XX' of the tyre, an angle A_{C} at least equal to 85° and at most equal to 95°,
**characterized in that** the tread (2) has a volume voids ratio T_{EV} at least equal to 20% and at most equal to 29% and a radial height H_{S} of the raised elements (22) at least equal to 6.0 mm and at most equal to 7.6 mm, **in that** the at least one elastomer compound of which the tread (2) is made has a glass transition temperature T_{g} at least equal to -18°C and at most equal to -6°C, a Shore A hardness at least equal to 60 and at most equal to 75, a loss at 60°C at least equal to 24% and at most equal to 35%, and contains a modified diene elastomer containing at least one functional group comprising a silicon atom, the latter being situated within the main chain of the elastomer, including the ends of the chain,
**in that** the textile reinforcers (311) of the at least one hooping layer (31) of the hoop reinforcement (3) comprise an aromatic polyamide, such as aramid, **and in that** the metal reinforcers (411, 421) of each of the at least two working layers (41, 42) of the working reinforcement (4) form, with the circumferential direction XX' of the tyre, an angle (A_{T1}, A_{T2}), measured in the equatorial plane XZ of the tyre, of which the absolute value is at least equal to 25° and at most equal to 40°.

2. Tyre (1) according to the preceding claim, **wherein** the tread (2) has a radial height H_{S} of the raised elements (22) at least equal to 6.5 mm.

3. Tyre (1) according to either one of the preceding claims, **wherein** the textile reinforcers (311) of the at least one hooping layer (31) of the hoop reinforcement (3) form, with the circumferential direction XX' of the tyre, an angle A_{F} measured in the equatorial plane XZ of the tyre, at most equal to 1° in terms of absolute value.

4. Tyre (1) according to any one of the preceding claims, the hoop reinforcement (3) having an axial width L_{F} and the working reinforcement (4) having an axial width L_{T}, **wherein** the axial width L_{F} of the hoop reinforcement (3) is at least equal to the axial width L_{T} of the working reinforcement (4) so that the hoop reinforcement (3) is entirely covering or projecting beyond the working reinforcement (4).

5. Tyre (1) according to any one of Claims 1 to 4, **wherein** the textile reinforcers (311) of the at least one hooping layer (31) of the hoop reinforcement (3) comprise a combination of an aromatic polyamide such as aramid, and of an aliphatic polyamide such as nylon.

6. Tyre (1) according to any one of Claims 1 to 4, **wherein** the textile reinforcers (311) of the at least one hooping layer (31) of the hoop reinforcement (3) comprise a combination of an aromatic polyamide such as aramid, and of a polyester such as polyethylene terephthalate (PET).

7. Tyre (1) according to any one of the preceding claims, **wherein** the metal reinforcers (411, 421) of each of the at least two working layers (41, 42) of the working reinforcement (4) form, with the circumferential direction XX' of the tyre, an angle (A_{T1}, A_{T2}), measured in the equatorial plane XZ of the tyre, of which the absolute value is at least equal to 27° and at most equal to 33°.

8. Tyre (1) according to any one of the preceding claims, **wherein** an intermediate layer (6) containing at least one elastomer compound is positioned radially on the inside of the tread (2) and radially on the outside of the hoop reinforcement (3).

9. Tyre (1) according to the preceding claim, **wherein** the intermediate layer (6) has a radial thickness E at least equal to 0.3 mm and at most equal to 4.0 mm.

10. Tyre (1) according to either one of Claims 8 and 9, the at least one elastomer compound of which the intermediate layer (6) is made having a Shore A hardness and a loss at 60°C, **wherein** the at least one elastomer compound of which the intermediate layer (6) is made has a Shore A hardness at least equal to 63 and at most equal to 69 and a loss at 60°C at least equal to 10% and at most equal to 16%.

11. Tyre (1) according to any one of Claims 8 to 10, **wherein** the intermediate layer (6) is asymmetric with respect to the equatorial plane XZ of the tyre such that the surface area S₁ of the meridian section of the portion (61) of intermediate layer (6) positioned axially in the half of the tyre that is intended to be mounted on the inboard side of the vehicle, is at least equal to 1.05 times and at most equal to 1.15 times the surface area S₂ of the meridian section of the portion (62) of intermediate layer (6) that is positioned axially in that half of the tyre that is intended to be mounted on the outboard side of the vehicle.

12. Tyre (1) according to any one of the preceding claims, **wherein** the arrangement of the raised elements (22) of the tread (2) is asymmetric with respect to the equatorial plane XZ of the tyre so that the volume voids ratio T_{EV1} of the half of the tread that is intended to be mounted on the inboard side of the vehicle is at least equal to 1.3 times and at most equal to 2 times the voids volume ratio T_{EV2} of the half of the tread that is intended to be mounted on the outboard side of the vehicle.

13. Tyre (1) according to any one of the preceding claims, the raised elements (22) of the tread (2) each comprising a radially exterior face, positioned on the tread surface (21), known as the contact face (221), **wherein** the contact face (221) of any raised element (22) of the tread (2) comprises at least one chamfer having a radial height H_{CH} at least equal to 1 mm and at most equal to 2 mm and forming, with the tread surface (21), an angle A_{CH} at least equal to 45°.
